(19) Europäisches Patentamt
European Patent Office
Office européen des brevets

(11) Publication number: 0 154 470 A2

# (12) EUROPEAN PATENT APPLICATION

(21) Application number: 85301215.1

(22) Date of filing: 22.02.85

(51) Int. Cl.[4]: C 01 B 21/40

(30) Priority: 01.03.84 GB 8405454

(43) Date of publication of application: 11.09.85 Bulletin 85/37

(84) Designated Contracting States: DE FR NL SE

(71) Applicant: AIR PRODUCTS AND CHEMICALS, INC.
P.O. Box 538
Allentown, Pennsylvania 18105(US)

(72) Inventor: Moseley, Fred
39 Somerville Road
Cobham Surrey(GB)

(74) Representative: Lucas, Brian Ronald
Lucas, George & Co. 135 Westhall Road
Warlingham Surrey CR3 9HJ(GB)

## (54) Process and plant for manufacturing nitric acid.

(57) Ammonia and oxygen are reacted in the presence of carbon dioxide to form nitric oxide which is subsequently oxidised to nitrogen peroxide. The nitrogen peroxide is then absorbed in water to form nitric acid. The presence of carbon dioxide very substantially reduces the flowrates through the reactor and absorber for a given nitric acid production. Recycle of a substantial portion of the tail gas from the absorber conserves carbon dioxide and minimises atmospheric pollution.

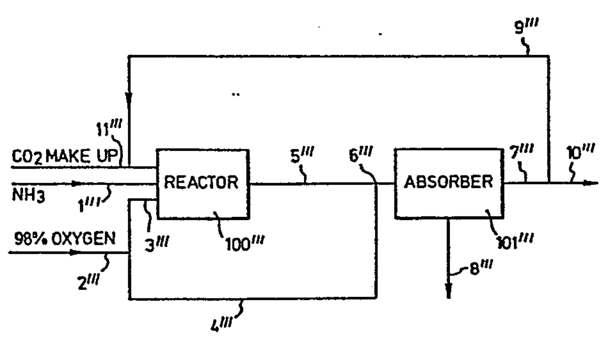


*Fig.4.*

EP 0 154 470 A2

# Process and Plant for Manufacturing Nitric Acid

This invention relates to a process and a plant for manufacturing nitric acid.

Conventionally, nitric acid is manufactured by a three stage process, viz:-

1. the oxidation of ammonia with air to form nitric oxide (NO);
2. the further oxidation of the nitric oxide with air to form nitrogen peroxide (a mixture of $NO_2$ and $N_2O_4$); and
3. the absorption of the nitrogen peroxide in water to form a solution of nitric acid.

Typically, stage 1 is carried out by passing the ammonia and air over a platinum or platinum alloy catalyst at 650-1000C with a very short contact time which reduces undesirable side reactions which occur on prolonged contact. Normally 94-96% of the ammonia is converted to nitric oxide although this varies according to the pressure of the reaction which is typically between 1 and 11 bar. The remainder of the ammonia is, for the most part, converted to nitrogen. Usually, the ratio of ammonia to air is adjusted so that the mixture entering the reactor is non-explosive, typically containing less than 13.5% (by volume) ammonia.

In stage 2, additional air is injected and the oxidation of the nitric oxide proceeds as the gases are cooled from stage 1 temperature to between 0-100°C.

Finally, in stage 3, the nitrogen peroxide is introduced into an absorber where it reacts with water to produce nitric acid and nitric oxide. The nitric oxide is re-oxidised by the surplus air present in the absorber and the nitrogen peroxide thus produced reacts with the water to provide more nitric acid and nitric oxide. This

process is repeated until the remaining nitrogen oxides reach a low partial pressure.

In Europe stage 1 is typically carried out at 1-4 bar. The nitric oxide is then compressed to 4-10 bar prior to stage 2. This split pressure process takes advantage of the higher conversion to nitric oxide available at low pressure and the favourable effects of higher pressure in stages 2 and 3.

The process and its variants are described in Kirk-Othmer, Encyclopedia of Chemical Technology; 3rd Edition, Volume 15, p 853 and in Proceedings of British Sulphur Corporation; Third International Conference on Fertilisers, London 12-14 November, 1979, Editor A.I. More, Paper 1.

In the conventional process described the unabsorbed gas (tail gas) from stage 3 is usually reheated, expanded through a turbine to recover pressure energy and then, vented to atmosphere. This tail gas normally contains nitrogen, unreacted surplus oxygen, argon, and a trace of water vapour, together with up to 0.5% (by volume) of nitrogen oxides. The pollution caused by the nitrogen oxides is rapidly becoming unacceptable and various proposals have been made for dealing with this problem.

US-PS-3,927,182 proposes a scheme in which the air in stage 1 is replaced by commercial grade oxygen (98%). The reaction mixture of ammonia and oxygen is maintained below its explosive limit and at the desired reaction temperature by recycling all the tail gas with the exception of a small purge stream to remove impurities which would otherwise accummulate in the system.

Although the volume of nitrogen oxide emission is drastically reduced by the substitution of air by oxygen, the total volume of gas entering the reactor and

the absorber is somewhat greater than that required when ammonia and air are used. Thus, the size of the reactor and the absorber are increased for a given nitric acid production rate.

The present invention aims, in its broadest embodiment, to provide a process and a plant in which the total volume of gas entering the reactor and the absorber for a given rate of production of nitric acid is lower than that required by either of the plants described above. In its more preferred embodiments the present invention achieves the aforesaid advantage and, at the same time, reduces atmospheric emission to levels similar to those achieved in US-PS-3,927,182.

According to the present invention there is provided a process for manufacturing nitric acid which comprises the steps of reacting ammonia with oxygen in a reactor in the presence of a diluent and a catalyst to produce a gas rich in nitric oxide, characterised in that said diluent comprises carbon dioxide.

The oxygen may be pure or may simply be oxygen enriched air or oxygen containing other impurities.

Preferably, the carbon dioxide comprises from 10 to 90% (by volume) and more preferably from 20 to 70% (by volume) of the gas entering the reactor.

As the following description shows, the use of carbon dioxide can substantially reduce the flow rate through the catalytic reactor and the absorber.

Whilst the present invention requires carbon dioxide it should be noted that many nitric acid plants are situated adjacent to ammonia synthesis plants. Typically the hydrogen required for the ammonia synthesis is obtained from natural gas, oil or coal and consequently abundant quantities of by-product carbon dioxide are usually readily available.

The gas rich in nitric oxide is typically

reacted with oxygen to form a nitrogen peroxide containing gas which is then reacted with water in an absorber to form a solution of nitric acid. The unabsorbed gas leaving the absorber is referred to as "tail gas".

Whilst the tail gas from the absorber could be vented via a turbine to atmosphere it is preferable to recycle the bulk (typically 0.1 to 99.99% and preferably 5.0 to 99.9% (by volume) of the tail gas to the reactor. It is, of course, necessary to purge a certain amount of the tail gas to remove accumulated nitrogen, argon and nitrogen oxides and to make good this loss with a make-up stream of carbon dioxide.

Typically, the tail gas contains between 1.0 and 99.9 (by volume) carbon dioxide, and more generally between 5.0 and 99.0%.

The present invention also provides a plant for manufacturing nitric acid which comprises a catalytic reactor adapted to react ammonia and oxygen to form nitric oxide characterised in that said catalytic reactor is connected to a source rich in carbon dioxide.

Preferably, said source rich in carbon dioxide contains from 1.0 to 99.999 and preferably, from 5.0 to 99.999% (by volume) carbon dioxide.

For a better understanding of the present invention and to show how the same may be carried into effect reference will now be made, by way of example, to the accompanying drawings, in which:-

Figure 1 shows a flowsheet of a conventional plant for manufacturing nitric acid;

Figure 2 shows a flowsheet of a plant for manufacturing nitric acid similar to that described in US-PS-3,927,182;

Figure 3 shows one embodiment of a plant for manufacturing nitric acid in accordance with the invention, and

Figure 4 shows another embodiment of a plant for manufacturing nitric acid in accordance with the invention.

Referring to Figure 1, ammonia at 177°C and 10.88 bar is fed through a pipe 1 into a reactor 100 which contains a platinum catalyst. Preheated air at 230°C and 10.88 bar is introduced through pipe 2 and part is passed through pipe 3 into the reactor 100 where it reacts with the air at 937°C to form a gas rich in nitric oxide. Approximately 94.5% (by volume) of the ammonia is converted to nitric oxide.

The balance of the air from pipe 2 is passed through pipe 4 to junction 6 where it is mixed with the gas rich in nitric oxide which leaves the reactor 100 through pipe 5. The gases partly react to form nitrogen peroxide which is then introduced into the absorber 101 where it reacts with water to form nitric acid which leaves the reactor through pipe 8. It will be noted that the total quantity of air is sufficient to leave a surplus of oxygen of 7.1% over that required to oxidise 100% of the ammonia to nitric acid according to reaction:-

$NH_2 + 2O_2 \rightarrow HNO_3 + H_2O$.

The remaining gas (the tail gas) which comprises essentially nitrogen from the feed air, oxygen, argon and water vapour, together with nitrogen from side reactions of the ammonia in reactor 10 and nitrogen oxides are vented via a turbine to atmosphere through pipe 7. To simplify the mass balances, it was assumed that no gases are lost by physical solution in the nitric acid produced in the flowsheets of Figures 1, 2, 3 and 4.

The temperature, pressure, composition and flowrate of various streams of a plant for manufacturing $0.9090 \times 10^6$ kg/day (1002 short tons/day) of nitric acid in accordance with Figure 1 are set out in Table 1. It will be noted that the total flow to the reactor 100 is 6200 kg moles/hr and that the total flow at junction 6, prior to reaction is 6370.6 kg/ moles/hr. It will also be noted that the absorber 101 has been designed to reduce nitrogen oxides (expressed as nitric oxide for simplicity) to 0.043% of the dry tail gas, a more stringent design than in the non-recycle case described in US-PS-3,927,182, to comply with increasingly stringent environmental requirements.

Referring now to Figure 2, there is shown a flowsheet of a plant similar to that shown in US-PS-3,927,182. In this embodiment the air feed is replaced with a stream of 98% pure oxygen (balance argon) from a cryogenic air separation plant. Tail gas is recycled to the reactor 100' via pipe 9' and serves both to reduce the concentration of ammonia in the mixture to below the explosive limit and to maintain the temperature in the reactor 100' at the desired level of 937°C. As before, 94.5% (by volume) of the ammonia is converted to nitric oxide and the dry tail gas contains the same 0.043% of nitrogen oxides for the purposes of comparison with Table 1.

The temperature, pressure, composition and flowrate of various streams of a plant for manufacturing 0.9125 x $10^6$ kg/day (1006 short tons/day) of nitric acid in accordance with Figure 2 are set out in Table 2.

It will be noted that for almost the same output of nitric acid the total flow to the reactor 100' is 7286.5 kg moles/hr and the total flow to junction 6, prior to reaction, is 6703.5 kg moles/hr. It will thus be seen that the flowrates have been substantially increased thereby necessitating the use of larger equipment at greater cost.

Referring now to Figure 3, there is shown a flowsheet of one embodiment of a plant in accordance with the invention. The plant appears generally similar to that shown in Figure 2 except that the recycle pipe 9' has been omitted and substantially pure carbon dioxide fed to the reactor 100'. The flow of carbon dioxide is set so that the temperature in the reactor 100' is 937°C as before. As before, 94.5% (by volume) of the ammonia is converted to nitric oxide. However, the dry tail gas contains 0.06% (by volume) of nitrogen oxides so as to give the same 2.3 kg mole/hr of nitrogen oxides discharged as in Table 1.

The temperature, pressure, composition and flowrate of a plant for manufacturing 0.9090 x $10^6$ kg/day (1002 short tons/day) of nitric acid in accordance with Figure 3 are set out in Table 3. It will be noted that the total flow to the reactor 100" is now only 4487 kg moles/hr and the total flow to junction 6", prior to reaction, is 3895.8 kg moles/hr. It will thus be seen that the flowrates have been reduced drastically thereby allowing the use of smaller equipment at lower cost.

It will be noted that considerable quantities of carbon dioxide are required. However, it will be recalled that hydrogen for ammonia synthesis is generally prepared

by the steam reforming of natural gas, oil or coal gasification with oxygen. In all cases large quantities of carbon dioxide are usually available as a by-product. Having said this we would strongly recommend that the embodiment shown in Figure 4 be used. This embodiment is generally similar to that shown in Figure 3 except that part of the tail gas from the absorber is recycled to the reactor 100"'. As before, 94.5% (by volume) of the ammonia is converted to nitric oxide. Furthermore, the dry tail gas contains the same 0.043% (by volume) of nitrogen oxides for the purposes of comparison with Tables 1 and 2.

The temperature, pressure, composition and flowrate of a plant for manufacturing $0.9125 \times 10^6$ kg/day (1006 short tons/day) of nitric acid in accordance with Figure 4 are set out in Table 4 (which is not fully optimised). It will be seen that the flowrate to the reactor 100"' is 5052.08 kg moles/hr and the flow to the junction 6"', prior to reaction, is 4409.7 kg moles/hr.

It will be noted that the embodiment shown in Figure 4 has two advantageous features, in particular:-

1) the flowrate to the reactor and the absorber is lower than either of the prior art embodiments; and
2) the volume of nitrogen oxides vented to the atmosphere is vastly lower than the volume released in the embodiment shown in Figure 1.

Table 5 shows the molar flows and partial pressures of oxygen and nitric oxide in pipes 5, 5' and 5"' and at junctions 6, 6' and 6"' immediately prior to reaction.

The sharp reduction in flows and rise in partial pressures for the embodiment shown in Figure 4 will be noted.

Various modifications to the embodiments

described with reference to Figure 4 are envisaged, for example the pipe 3"' could be dispensed with. In such an embodiment the oxygen for reaction with the ammonia would be provided via lines 4"' and 9"'. This would, of course, increase the volume of the recycle stream through line 9"' by a factor of about 1.34. At the same time the oxygen and carbon dioxide vented via pipe 10"' are increased and the nitric oxide partial pressure in the gas downstream of junction 6"' falls. However, there are substantial increases in oxygen partial pressure at the exit of the absorber and this, in turn, accelerates the termolecular oxidation reaction between the nitric oxide from the reactor and the oxygen.

Although the reactor and the absorber in the embodiments described operate at substantially the same pressure, the addition of carbon dioxide is also beneficial in dual pressure plants, particularly in the low pressure reactor. The advantages of using carbon dioxide may also be employed to improve ammonia-nitric oxide conversion efficiency by lowering the total pressure in the reactor, or by giving more flexibility in the choice of ammonia: oxygen: inert gas ratios used.

It will be noted that with the recycle system shown in Figure 4, the percentage of nitrogen oxides in the tail gas can be allowed to rise substantially and still meet environmental regulations as to the total quantity of nitrogen oxide vented. When this occurs it leads to a substantial reduction in the height of the absorber.

Whilst the preferred embodiment assumed that the reactor will be fed with ammonia, 98% pure oxygen and carbon dioxide, it will be appreciated that 98% pure oxygen is not essential. Indeed, small benefits could accrue from the use of only slightly oxygen enriched air. However, commercially, we would recommend that oxygen of

at least 90% (by volume) purity be used.

CONVENTIONAL SINGLE PRESSURE NITRIC ACID MANUFACTURE

Plant to Make 1002 Short Tons per Day (0.9090 x $10^6$kg/day) of Nitric Acid

94.5% Conversion of Ammonia to Nitric Oxide, Balance to Nitrogen

| Kg moles/hr. | Pipe Number * | | | | | | | |
|---|---|---|---|---|---|---|---|---|
| | 1 | 2 | 3 | 4 | 5 | 6 ** | 7 | 8 |
| $NH_3$ | 638.6 | - | - | - | - | - | - | - |
| $O_2$ | | 1368.1 | 1165.1 | 203.0 | 384.4 | 587.4 | 136.5 | |
| $N_2$ | | 5101.4 | 4344.6 | 756.8 | 4362.2 | 5119.0 | 5119.0 | |
| A | | 60.7 | 51.7 | 9.0 | 51.7 | 60.7 | 60.7 | |
| $CO_2$ | | | - | | | | | |
| NO | | | - | | 603.5 | 603.5 | 2.3*** | |
| $HNO_3$ | | | - | | | | | 601.2 |
| TOTAL | 638.6 | 6530.2 | 5561.4 | 968.8 | 5401.8 | 6370.6 | 5318.5 | 601.2 |
| TEMP °C | 177 | 230 | ~250 | 30 | 937 | 30 | 30 | 30 |
| PRESS. BARS | 10.88 | 10.88 | 10.88 | 10.88 | 10.6 | 10.4 | 10.0 | 1.0 |

* Water omitted from mass balance for simplicity

** Assuming no nitric oxide has yet oxidized

*** As NO: in practice a mixture of NO and $NO_2$ with oxygen content of the gas somewhat reduced as a result.

TABLE 1

TABLE 2

SINGLE PRESSURE NITRIC ACID PLANT WITH TAIL GAS RECYCLE AND 98% OXYGEN FOR OXIDATION

Plant to Make 1006 Short Tons per Day ($0.9125 \times 10^6$ kg/day) of Nitric Acid. Exit gas to Same Partial Pressures of NO and $O_2$ as in Table 1

94.5% Conversion of Ammonia to Nitric Oxide, Balance to Nitrogen

| Kg moles/hr | Pipe Number * | | | | | | | | | |
|---|---|---|---|---|---|---|---|---|---|---|
| | 1' | 2' | 3' | 4' | 5' | 6'** | 7' | 8' | 9' | 10' |
| $NH_3$ | 638.6 | | | | | | | | | |
| $O_2$ | | 1232.7 | 1021.6 | 211.1 | 384.4 | 595.5 | 144.6 | | 143.5 | 1.12 |
| $N_2$ | | - | | | 2273.2 | 2273.2 | 2273.2 | | 2255.6 | 17.6 |
| A | | 25 | 20.9 | 4.1 | 3224.8 | 3228.9 | 3228.9 | | 3203.9 | 25.0 |
| $CO_2$ | | - | | | | | | | | |
| NO | | - | | | 605.9 | 605.9 | 2.45 | | 2.43*** | 0.019*** |
| $HNO_3$ | | - | | | | | | 603.5 | | |
| TOTAL | 638.6 | 1257.7 | 1042.5 | 215.2 | 6488.3 | 6703.4 | 5649.15 | 603.5 | 5605.4 | 43.74 |
| TEMP °C | 177 | 30 | ~250 | 30 | 937 | 30 | 30 | 30 | ~250 | 30 |
| PRESS. BARS | 10.88 | 10.88 | 10.88 | 10.88 | 10.6 | 10.4 | 10.0 | 1.0 | 10.0 | 1.0 |

* Water omitted from mass balance for simplicity

** Assuming no nitric oxide has yet oxidized

*** As NO: in practice a mixture of NO and $NO_2$ with oxygen content of gas reduced as a result.

SINGLE PRESSURE NITRIC ACID PLANT WITH 98% OXYGEN FOR OXIDATION AND $CO_2$ ADDITION

Plant to Make 1002 Short Tons per Day ($0.9090 \times 10^6$ kg/day) of Nitric Acid

94.5% Conversion of Ammonia to Nitric Oxide, Balance to Nitrogen

| Kg moles/hr | Pipe Number * | | | | | | | |
|---|---|---|---|---|---|---|---|---|
| | 1" | 2" | 3" | 4" | 5" | 6"** | 7" | 8" |
| $NH_3$ | 638.6 | - | - | - | - | - | - | - |
| $O_2$ | | 1368.1 | 1165.1 | 203.0 | 384.4 | 587.4 | 136.5 | |
| $N_2$ | | | - | - | 17.6 | 17.6 | 17.6 | |
| A | | 27.3 | 23.3 | 4.0 | 23.3 | 27.3 | 27.3 | |
| $CO_2$ | | | 2660.0 | | 2660.0 | 2660.0 | 2660.0 | |
| NO | | | | | 603.5 | 603.5 | 2.3*** | |
| $HNO_3$ | | | | | | | | 601.2 |
| TOTAL | 638.6 | 1395.4 | 3848.4 | 207.0 | 3688.8 | 3895.8 | 3843.7 | 601.2 |
| TEMP °C | 177 | 230 | ~250 | 30 | 937 | 30 | 30 | 30 |
| PRESS. BARS | 10.88 | 10.88 | 10.88 | 10.88 | 10.6 | 10.4 | 10.0 | 10.0 |

* Water omitted from mass balance for simplicity

** Assuming no nitric oxide has yet oxidized

*** As NO: in practice a mixture of NO and $NO_2$ with oxygen content of the gas somewhat reduced as a result.

TABLE 3

TABLE 4

SINGLE PRESSURE NITRIC ACID PLANT WITH $CO_2$ ADDITION AND RECYCLE AND 98% OXYGEN FOR OXIDATION

Plant to make 1006 Short Tons per Day (0.9125 x $10^6$ kg/day)
Partial Pressures of NO and $O_2$ as in Tables 1 and 2

-94.5% Conversion of Ammonia to Nitric Oxide, Balance to Nitrogen

| Kg mole /hour | Pipe Number | | | | | | | | | | |
|---|---|---|---|---|---|---|---|---|---|---|---|
| | 1''' | 2''' | 3''' | 4''' | 5''' | *6''' | 7''' | 8''' | 9''' | 10''' | 11''' |
| $NH_3$ | 638.6 | | | | | | | | | | |
| $O_2$ | | 1235.6 | 1083.0 | 152.6 | 384.4 | 537.0 | 86.1 | | 82.1 | 4.0 | |
| $N_2$ | | | | | 378.9 | 378.9 | 378.9 | | 361.3 | 17.6 | |
| A | | 25.0 | 21.8 | 3.2 | 537.0 | 540.2 | 540.2 | | 515.2 | 25.0 | |
| $CO_2$ | | | | | 2348.7 | 2348.7 | 2348.7 | | 2239.6 | 109.1 | 109.1 |
| NO | | | | | 604.9 | 604.9 | 1.45 | | ***1.38 | ***0.067 | |
| $HNO_3$ | | | | | | | | 603.5 | | | |
| TOTAL | 638.6 | 1260.6 | 1104.8 | 155.8 | 4253.9 | 4409.7 | 3355.35 | 603.5 | 3199.58 | 155.7 | 109.1 |
| TEMP °C | 177 | 30 | ~250 | 30 | 937 | 30 | 30 | 30 | ~250 | 30 | 250 |
| PRESS. BARS | 10.88 | 10.88 | 10.88 | 10.88 | 10.6 | 10.4 | 10.0 | 1.0 | 10.0 | 1.0 | 10.88 |

* Water omitted from mass balance for simplicity

** Assuming no nitric oxide has yet oxidized

*** As NO: in practice a mixture of NO and $NO_2$ with oxygen content of gas reduced as a result.

TABLE 5

COMPARISON OF TOTAL GAS FLOWS AND PARTIAL PRESSURES

| Type of Plant | Stream 5, 5' and 5''' | | | Stream 6, 6' and 6''' | | |
|---|---|---|---|---|---|---|
| | Flow kg. moles/hr | Pressure bar Oxygen | Pressure bar NO | Flow kg. moles/hr | Pressure bar Oxygen | Pressure bar NO |
| Conventional (Table 1) | 5401.8 | 0.754 | 1.184 | 6370.6 | 0.959 | 0.985 |
| $O_2$ with Tail Gas Recycle (Table 2) | 6488.3 | 0.628 | 0.990 | 6703.4 | 0.924 | 0.940 |
| $CO_2$ addition with Recycle (Table 4) | 4253.9 | 0.958 | 1.507 | 4409.7 | 1.266 | 1.427 |

CLAIMS

1. A process for manufacturing nitric acid which comprises the steps of reacting ammonia with oxygen in a reactor in the presence of a diluent and a catalyst to produce a gas rich in nitric oxide, characterised in that said diluent comprises carbon dioxide.

2. A process according to Claim 1, wherein the carbon dioxide comprises from 10 to 90% (by volume) of the gas entering the reactor.

3. A process according to Claim 2, wherein the carbon dioxide comprises from 20 to 70% (by volume) of the gas entering the reactor.

4. A process according to Claims 1, 2 or 3, wherein the gas rich in nitric oxide is reacted with oxygen to form a nitrogen peroxide containing gas, said nitrogen peroxide containing gas is reacted with water in an absorber to form a solution of nitric acid and unabsorbed tail gas, and wherein at least part of said tail gas is recycled to said reactor.

5. A process according to Claim 4, wherein from 0.1 to 99.99% (by volume) of said tail gas is recycled to said absorber.

6. A process according to Claim 5, wherein from 5.0 to 99.9% (by volume) of said tail gas is recycled to said absorber.

7. A process according to Claims 4, 5 or 6, wherein said tail gas contains from 1.0 to 99.9% (by volume) carbon dioxide.

8. A process according to Claim 7, wherein said tail gas contains from 5.0 to 99.0% (by volume) carbon dioxide.

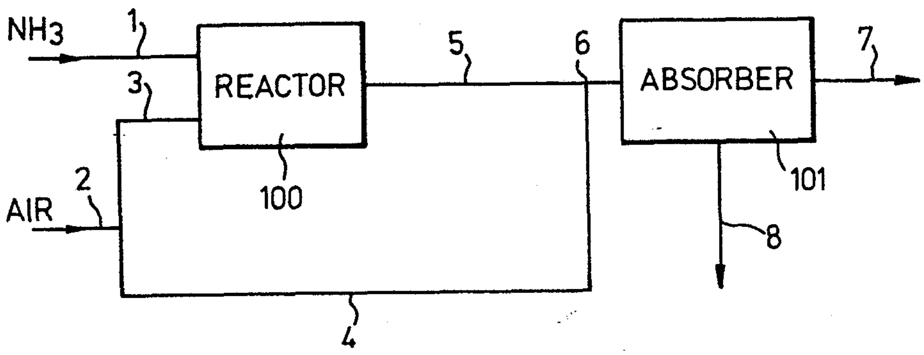
NH3
1
3
REACTOR
100
5
6
ABSORBER
7
101
8
2
AIR
4

Fig.1.

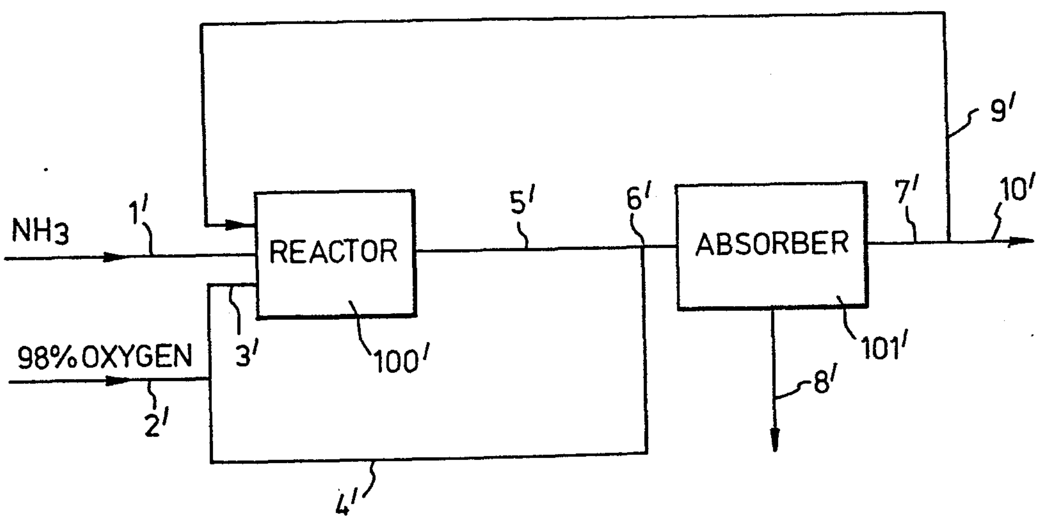
9'
NH3
1'
REACTOR
5'
6'
ABSORBER
7'
10'
98% OXYGEN
3'
100'
101'
8'
2'
4'

Fig. 2.

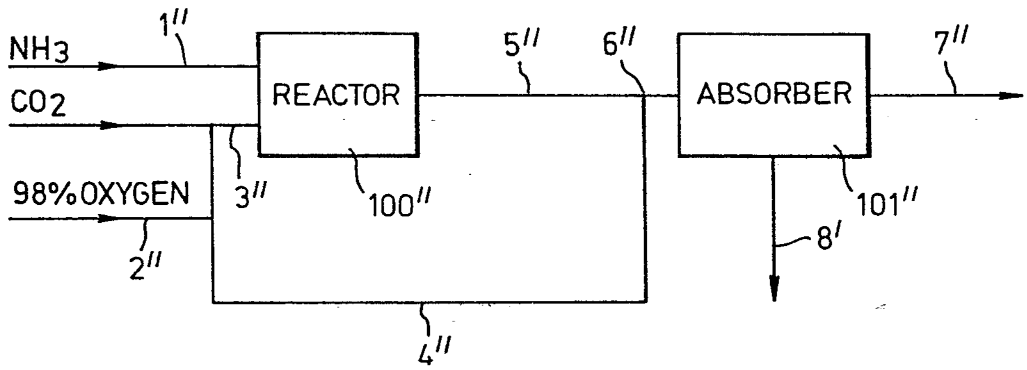
NH3
1''
CO2
REACTOR
5''
6''
ABSORBER
7''
98% OXYGEN
3''
100''
101''
2''
8'
4''

Fig. 3.

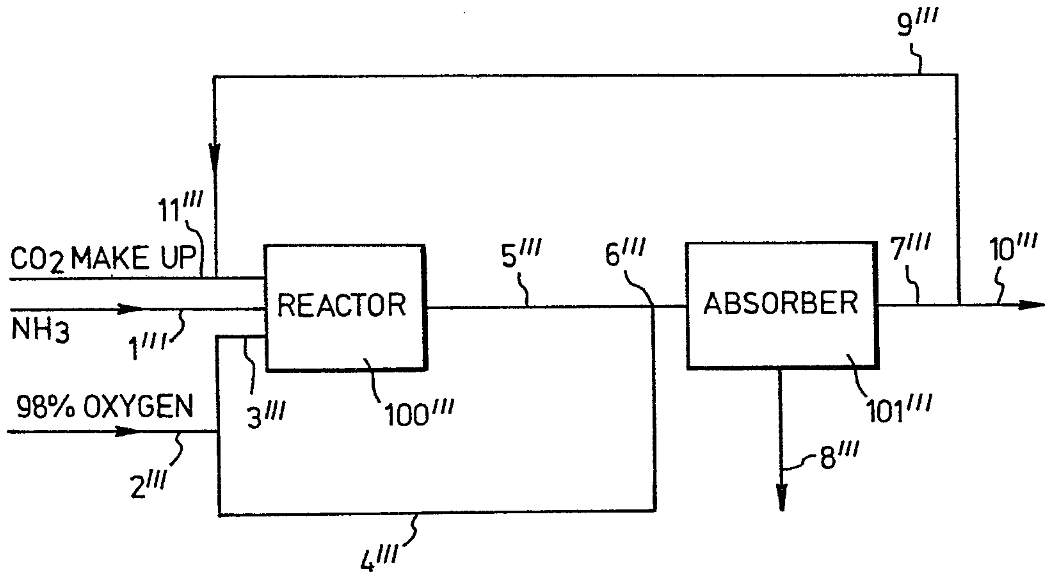
9'''
11'''
CO2 MAKE UP
REACTOR
5'''
6'''
ABSORBER
7'''
10'''
NH3
1'''
98% OXYGEN
3'''
100'''
101'''
2'''
8'''
4'''

Fig. 4.